# EUROPÄISCHE PATENTANMELDUNG

(11) **EP 3 375 984 A1**
(43) Veröffentlichungstag der Anmeldung: **19.09.2018**
(21) Anmeldenummer: 17161480.3
(22) Anmeldetag: 17.03.2017
(51) Int. Cl.: F01D 25/06, F01D 25/12, F04D 29/52, F04D 29/68, F01D 25/28

(54) **ZIRKULATIONSVORRICHTUNG FÜR EINE STRÖMUNGSMASCHINE, VERFAHREN ZUM HERSTELLEN EINER ZIRKULATIONSVORRICHTUNG UND STRÖMUNGSMASCHINE**

(71) Anmelder: MTU Aero Engines AG, 80995 München (DE)
(72) Erfinder: Hofmann, Dieter, 85221 Dachau (DE)

(57) **Zusammenfassung**

Die Erfindung betrifft Zirkulationsvorrichtung (10) für eine Strömungsmaschine (100), mit wenigstens einer Zirkulationsstruktur (20) und mit wenigstens einem Strukturträger (40), an welchem die wenigstens eine Zirkulationsstruktur (20) gegenüber einem Gehäuse (102) der Strömungsmaschine (100) abstützbar ist, wobei der Strukturträger (40) wenigstens einen Hohlraum (50) umfasst, in welchem zumindest eine Versteifungsstruktur (60) vorgesehen ist. Weitere Aspekte der Erfindung betreffen ein Verfahren zum Herstellen einer Zirkulationsvorrichtung (10) sowie eine Strömungsmaschine (100) mit einer Zirkulationsvorrichtung (10).

## Beschreibung

Die Erfindung betrifft eine Zirkulationsvorrichtung für eine Strömungsmaschine, mit wenigstens einer Zirkulationsstruktur und mit wenigstens einem Strukturträger, an welchem die wenigstens eine Zirkulationsstruktur gegenüber einem Gehäuse der Strömungsmaschine abstützbar ist. Ein zweiter Aspekt der Erfindung betrifft ein Verfahren zum Herstellen einer Zirkulationsvorrichtung. Ein dritter Aspekt der Erfindung betrifft eine Strömungsmaschine mit einer Zirkulationsvorrichtung.

Zirkulationsstrukturen für Strömungsmaschinen, insbesondere für Turboverdichter sind in Form so genannter "Casing Treatments" und "Hub Treatments" bekannt. Diese Zirkulationsstrukturen haben primär die Aufgabe, den aerodynamisch stabilen Betriebsbereich der Strömungsmaschine, insbesondere des Verdichters zu erhöhen. Dabei wird die so genannte Pumpgrenze zu höheren Verdichterdrücken hin, d. h. zu einer höheren Verdichterbelastung, verschoben. Die für das Pumpen des Verdichters verantwortlichen Störungen treten unter anderem an gehäuseseitigen Enden von Laufschaufeln auf. Durch die Zirkulationsstrukturen werden die Strömungen in diesen Bereichen stabilisiert. Derartige Zirkulationsstrukturen sind beispielsweise aus den Druckschriften DE 10 2008 010 283 A1, EP 2242931 A1, DE 10 2004 026 367 A1 und EP 2 818 724 A1 bekannt.

Die DE 10 2004 032 978 A1 beschreibt eine Strömungsstruktur für einen Turboverdichter mit einer Ringkammer, welche konzentrisch zu einer Achse des Turboverdichters angeordnet ist und welche radial an einen Hauptströmungskanal angrenzt. In der Ringkammer sind Leitelemente angeordnet. Zudem ermöglicht die Ringkammer in einem vorderen und hinteren Bereich einen Strömungsdurchtritt in Umfangsrichtung.

Aus der DE 10 2013 216 392 A1 ist eine Vorrichtung zur Regelung der Temperatur eines Bauteils einer Strömungsmaschine mit einem Kanal und einer Hohlstruktur für den Durchfluss eines Mediums zur zumindest teilweisen Kühlung oder Erwärmung von zumindest einer Oberfläche des Bauteils bekannt. Das Bauteil ist als Zirkulationsstruktur der Strömungsmaschine ausgebildet und der mediumleitende Kanal sowie die mediumleitende Hohlstruktur sind im Bereich der Oberfläche der Zirkulationsstruktur ausgebildet.

Aufgabe der vorliegenden Erfindung ist es, eine verbesserte Zirkulationsvorrichtung für eine Strömungsmaschine zu schaffen. Weitere Aufgaben der Erfindung bestehen darin, ein Verfahren zum Herstellen einer solchen Zirkulationsvorrichtung sowie eine Strömungsmaschine mit einer derartigen Zirkulationsvorrichtung zu schaffen.

Die Aufgaben werden erfindungsgemäß durch eine Zirkulationsvorrichtung mit den Merkmalen des Patentanspruchs 1, durch ein Verfahren mit den Merkmalen des Patentanspruchs 14 zum Herstellen einer Zirkulationsvorrichtung sowie durch eine Strömungsmaschine mit den Merkmalen des Patentanspruchs 15 gelöst. Vorteilhafte Ausgestaltungen mit zweckmäßigen Weiterbildungen der Erfindung sind in den Unteransprüchen angegeben, wobei vorteilhafte Ausgestaltungen der Zirkulationsvorrichtung als vorteilhafte Ausgestaltungen des Verfahrens und der Strömungsmaschine anzusehen sind.

Ein erster Aspekt der Erfindung betrifft eine Zirkulationsvorrichtung für eine Strömungsmaschine, mit wenigstens einer Zirkulationsstruktur und mit wenigstens einem Strukturträger, an welchem die wenigstens eine Zirkulationsstruktur gegenüber einem Gehäuse der Strömungsmaschine abstützbar ist. Die Strömungsmaschine kann beispielsweise als Gasturbine, also beispielsweise als Flugtriebwerk ausgestaltet sein. Mit dem Begriff Zirkulationsstruktur sind sowohl Zirkulationsstrukturen als solche sowie Rezirkulationsstrukturen umfasst. Mit anderen Worten kann es sich bei der Zirkulationsstruktur auch um eine Rezirkulationsstruktur handeln. Der Strukturträger kann beispielsweise formschlüssig mit dem Gehäuse verbunden sein, um nur ein Beispiel zu nennen.

Gemäß der Erfindung umfasst der Strukturträger wenigstens einen Hohlraum, in welchem zumindest eine Versteifungsstruktur vorgesehen ist. Dies ist von Vorteil, da durch das Vorsehen des Hohlraums eine besonders leichte Ausgestaltung des Strukturträgers und damit der Zirkulationsvorrichtung insgesamt ermöglicht ist. Dadurch ist auch eine Montage der Zirkulationsvorrichtung an der Strömungsmaschine unter besonders geringem Aufwand ermöglicht. Die Versteifungsstruktur kann auch ein einzelnes Versteifungselement, welches beispielsweise als Versteifungsstrebe ausgestaltet sein kann, umfassen. Die Versteifungsstruktur kann sich allgemein über einen Teilbereich des Hohlraums erstrecken, wodurch eine besonders gezielte Versteifung erreicht werden kann. Im Unterschied zu aus dem Stand der Technik bekannten Vorrichtungen kann der, den wenigstens einen Hohlraum sowie die in dem Hohlraum vorgesehene Versteifungsstruktur aufweisende Strukturträger sowohl besonders leicht, als auch besonders steif ausgestaltet sein. Dadurch eignet sich die Zirkulationsvorrichtung insbesondere für einen Einsatz in einer als Flugtriebwerk ausgebildeten Strömungsmaschine.

Der Erfindung liegt die Erkenntnis zugrunde, dass die Zirkulationsstruktur zwar eine, einem Gehäuseinnenraum des Gehäuses zugewandte, komplexe Strukturoberfläche aufweisen kann, jedoch eine ausreichende Steifigkeit der Zirkulationsvorrichtung durch das Vorsehen der zumindest einen Versteifungsstruktur in dem wenigstens einen Hohlraum in dem Strukturträger erreicht werden kann. Durch das Vorsehen des wenigstens einen Hohlraums können Masseansammlungen in der Zirkulationsvorrichtung verringert und damit das Gesamtgewicht der Zirkulationsvorrichtung gegenüber aus dem Stand der Technik bekannten Vorrichtungen gesenkt werden.

In einer vorteilhaften Ausgestaltung der Erfindung ist vorgesehen, dass der Hohlraum zumindest bereichsweise durch die Zirkulationsstruktur begrenzt ist. Dies ist von Vorteil, da die Zirkulationsstruktur somit den Hohlraum beispielsweise gegenüber dem Gehäuseinnenraum des Gehäuses abgrenzen kann, wodurch auf zusätzliche Begrenzungswände zum Abgrenzen des Hohlraums gegenüber dem Gehäuseinnenraum verzichtet werden kann. Dadurch kann die Zirkulationsvorrichtung mit besonders geringem Gewicht ausgestaltet sein.

In einer weiteren vorteilhaften Ausgestaltung der Erfindung weist der Strukturträger zumindest ein Wandelement auf, welches zumindest in einer Radialerstreckungsrichtung der Zirkulationsvorrichtung gegenüberliegend zu der Zirkulationsstruktur angeordnet ist, und an welchem die Zirkulationsvorrichtung gegenüber dem Gehäuse der Strömungsmaschine abstützbar ist. Dies ist von Vorteil, da das Wandelement ein radiales Abstützen der Zirkulationsvorrichtung an dem Gehäuse ermöglicht, wodurch die Zirkulationsvorrichtung beim Betrieb der Strömungsmaschine zumindest überwiegend einer Druckbelastung unterzogen werden kann. Eine Biegebeanspruchung der Zirkulationsvorrichtung kann damit zumindest weitgehend ausgeschlossen werden. Die Druckbelastung gestattet im Gegensatz zur Biegebeanspruchung eine Ausgestaltung der Zirkulationsvorrichtung und insbesondere des Strukturträgers mit besonders dünnen Wandstärken, wodurch zusätzlich an Gewicht eingespart werden kann.

In einer weiteren vorteilhaften Ausgestaltung der Erfindung ist die Versteifungsstruktur einerseits mit der Zirkulationsstruktur und andererseits mit dem Wandelement verbunden. Dies ist von Vorteil, da hierdurch eine besonders direkte Einleitung von beim Betrieb der Strömungsmaschine auf die Zirkulationsstruktur wirkenden Kräften über die Versteifungsstruktur, das Wandelement und schließlich in das Gehäuse ermöglicht ist. Dadurch ist insgesamt ein besonders günstiger Kraftfluss gegeben.

In einer weiteren vorteilhaften Ausgestaltung der Erfindung umfasst die Versteifungsstruktur miteinander verbundene Versteifungselemente, welche den Hohlraum in Teilräume unterteilen. Dies ist von Vorteil, da durch das Verbinden der Versteifungselemente eine besonders hohe Steifigkeit der Versteifungsstruktur erreicht werden kann. Beim Unterteilen des Hohlraums können sich die Versteifungselemente über weite Bereiche des Hohlraums erstrecken, wodurch letzterer besonders gut zur Abstützung von beim Betrieb der Strömungsmaschine auf die Zirkulationsvorrichtung wirkenden Kräften ausgenutzt werden kann.

In einer weiteren vorteilhaften Ausgestaltung der Erfindung weist die Zirkulationsvorrichtung wenigstens eine Öffnung auf, über welche ein Fluid zwischen dem Hohlraum und der Umgebung der Zirkulationsvorrichtung austauschbar ist. Dies ist von Vorteil, da durch die Öffnung ein besonders einfacher Druckausgleich zwischen der Umgebung und dem Hohlraum ermöglicht ist. Dadurch kann beispielsweise in dem Hohlraum enthaltene Luft, welche sich infolge des Betriebs der Strömungsmaschine erwärmt über die Öffnung an die Umgebung austreten und damit der Strukturträger druckentlastet werden.

Die Zirkulationsvorrichtung kann auch mehrere Öffnungen aufweisen, mittels welchen die Teilräume mit der Umgebung verbunden sein können. Dadurch ist einerseits ein Druckausgleich beim Betrieb der Strömungsmaschine in jedem der Teilräume ermöglicht und andererseits kann beispielsweise ein Herstellen zumindest eines Teilbereichs der Versteifungsstruktur durch ein generatives Herstellverfahren erleichtert sein. Dies ist damit zu begründen, dass über die Öffnungen beim Herstellen der Versteifungsstruktur überschüssiges Pulver (beispielsweise Metallpulver) besonders leicht aus den Teilräumen entfernt werden kann.

In einer weiteren vorteilhaften Ausgestaltung der Erfindung ist die wenigstens eine Öffnung von der Zirkulationsstruktur beabstandet. Dies ist von Vorteil, da hierdurch ein Entweichen eines Arbeitsmediums aus dem Gehäuseinnenraum des Gehäuses durch die Zirkulationsstruktur an die Umgebung besonders einfach unterbunden werden kann. Mit anderen Worten erstreckt sich die wenigstens eine Öffnung nicht durch die Zirkulationsstruktur.

In einer weiteren vorteilhaften Ausgestaltung der Erfindung ist die Versteifungsstruktur zumindest bereichsweise polyederförmig, insbesondere tetraederförmig, ausgebildet. Dies ist von Vorteil, da eine derartige Polyederform eine besonders belastungsgerechte Versteifung der Zirkulationsvorrichtung gestattet. Durch ein zumindest bereichsweises, tetraederförmiges Ausgestalten der Versteifungsstruktur kann letztere unter besonders geringem Materialaufwand hergestellt werden und dementsprechend besonders leicht ausgestaltet sein.

In einer weiteren vorteilhaften Ausgestaltung der Erfindung ist die Versteifungsstruktur zumindest bereichsweise als Fachwerk ausgebildet. Dies ist von Vorteil, da beim Betrieb der Strömungsmaschine ein Auftreten von ungünstigen Biegemomenten beim Abstützen der Zirkulationsvorrichtung gegenüber dem Gehäuse zumindest weitgehend ausgeschlossen werden kann. Dadurch kann eine besonders hohe Ausfallsicherheit der Zirkulationsvorrichtung erreicht werden.

In einer weiteren vorteilhaften Ausgestaltung der Erfindung ist die Versteifungsstruktur zumindest bereichsweise aus einem Schaum, insbesondere aus einem Metallschaum, gebildet. Dies ist von Vorteil, da die Versteifungsstruktur durch den Schaum eine besonders homogene Steifigkeit aufweisen kann. Insbesondere kann durch den Schaum eine besonders großflächige Verteilung von beim Betrieb der Strömungsmaschine auftretenden Kräften erzielt werden. Ist der Schaum als Metallschaum ausgebildet, so ist eine besonders gute Wärmeleitung erzielbar, wodurch die Zirkulationsvorrichtung beispielsweise durch Beaufschlagen der Versteifungsstruktur mit einem Kühlmedium, besonders effektiv gekühlt werden kann.

In einer weiteren vorteilhaften Ausgestaltung der Erfindung ist die Versteifungsstruktur zumindest bereichsweise als bionische Struktur ausgebildet. Dies ist von Vorteil, da die Zirkulationsvorrichtung dadurch insgesamt gleichzeitig eine besonders hohe Steifigkeit sowie ein besonders geringes Gewicht aufweisen kann. Lediglich als Beispiel für eine derartige bionische Struktur sei an dieser Stelle eine Wabenstruktur mit beispielsweise hexagonalen Strukturelementen genannt.

In einer weiteren vorteilhaften Ausgestaltung der Erfindung ist die Zirkulationsvorrichtung einteilig ausgebildet. Dies ist von Vorteil, da hierdurch ein besonders aufwandsarmes Festlegen der Zirkulationsvorrichtung an der Strömungsmaschine ermöglicht ist, wobei besonders wenige zusätzliche Befestigungsmittel, wie beispielsweise Schrauben eingesetzt werden.

In einer vorteilhaften Weiterbildung der Erfindung ist die Zirkulationsvorrichtung als geschlossener Ring ausgebildet oder aus wenigstens zwei Ringsegmenten gebildet ist. Dies ist von Vorteil, da hierdurch eine besonders aufwandsarme Montage der Zirkulationsvorrichtung an der Strömungsmaschine ermöglicht ist.

Ein zweiter Aspekt der Erfindung betrifft ein Verfahren zum Herstellen einer Zirkulationsvorrichtung, wobei die Zirkulationsvorrichtung zumindest teilweise durch ein generatives Herstellverfahren und/oder durch ein Gussverfahren hergestellt wird. Das zumindest teilweise Herstellen der Zirkulationsvorrichtung durch ein generatives Herstellverfahren ist von Vorteil, da hierdurch besonders komplexe Strukturen, insbesondere Hinterschneidungen aufwandsarm erzeugt werden können. Das zumindest teilweise Herstellen der Zirkulationsvorrichtung durch ein Gussverfahren ermöglicht eine besonders schnelle und damit besonders für die Serienherstellung geeignete Fertigung der Zirkulationsvorrichtung. Denkbar ist auch, dass einzelne Teilbereiche der Zirkulationsvorrichtung durch das generative Herstellverfahren und andere Teilbereiche der Zirkulationsvorrichtung durch andere Verfahren als das Gussverfahren hergestellt bzw. durch weitere, beispielsweise mechanische oder chemische Bearbeitungsschritte weiterbearbeitet werden. Dadurch ist insgesamt eine rasche Herstellung komplexer Strukturen der Zirkulationsvorrichtung ermöglicht. Weitere Merkmale und deren Vorteile gehen aus der Beschreibung des ersten Erfindungsaspekts hervor. Vorteilhafte Ausgestaltungen des ersten Erfindungsaspekts sind dabei als vorteilhafte Ausgestaltungen des zweiten Erfindungsaspekts und umgekehrt anzusehen.

Ein dritter Aspekt der Erfindung betrifft eine Strömungsmaschine, insbesondere ein Flugtriebwerk, umfassend wenigstens eine Zirkulationsvorrichtung, welche gemäß dem ersten Erfindungsaspekt ausgebildet und/oder gemäß dem zweiten Erfindungsaspekt hergestellt ist. Die sich hieraus ergebenden Merkmale und deren Vorteile gehen aus der Beschreibung des ersten und des zweiten Erfindungsaspekts hervor. Vorteilhafte Ausgestaltungen des ersten und zweiten Erfindungsaspekts sind dabei als vorteilhafte Ausgestaltungen des dritten Erfindungsaspekts und umgekehrt anzusehen.

Weitere Merkmale der Erfindung ergeben sich aus den Ansprüchen und den Ausführungsbeispielen. Die vorstehend in der Beschreibung genannten Merkmale und Merkmalskombinationen, sowie die nachfolgend in den Ausführungsbeispielen genannten und/oder alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen. Es sind somit auch Ausführungen von der Erfindung als umfasst und offenbart anzusehen, die in den Ausführungsbeispielen nicht explizit gezeigt und erläutert sind jedoch durch separierte Merkmalskombinationen aus den erläuterten Ausführungen hervorgehen und erzeugbar sind. Es sind auch Ausführungen und Merkmalskombinationen als offenbart anzusehen, die somit nicht alle Merkmale eines ursprünglich formulierten unabhängigen Anspruchs aufweisen. Dabei zeigt:
Fig. 1 eine Schnittdarstellung eines Teilbereichs einer Strömungsmaschine, welche ein Gehäuse und eine, in einer Gehäuseausnehmung angeordnete Zirkulationsvorrichtung umfasst;
Fig. 2a eine vergrößerte Darstellung eines in Fig. 1 strichpunktiert umrandeten Bereichs A;
Fig. 2b eine vergrößerte Darstellung einer Versteifungsstruktur der Zirkulationsvorrichtung, wobei die Versteifungsstruktur zumindest bereichsweise eine Fachwerk-Struktur aufweist;
Fig. 2c eine weitere, vergrößerte Darstellung der Versteifungsstruktur, welche zumindest bereichsweise aus einem Schaum gebildet ist; und
Fig. 2d eine weitere, vergrößerte Darstellung der Versteifungsstruktur, welche zumindest bereichsweise als bionische Struktur ausgestaltet ist.

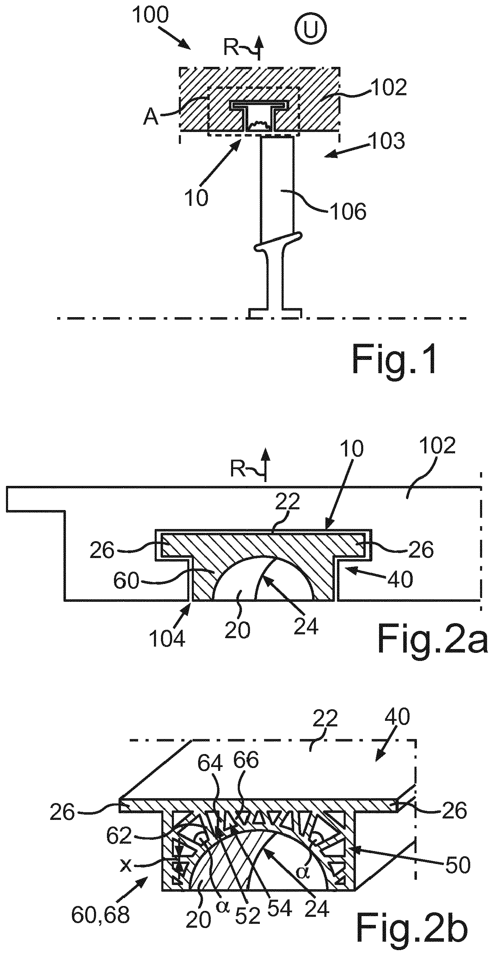

Fig. 1 zeigt einen Halbschnitt eines Teilbereichs einer vorliegend lediglich schematisch und ausschnittsweise dargestellten Strömungsmaschine 100, welche beispielsweise als Flugtriebwerk ausgebildet sein kann. Die Strömungsmaschine 100 umfasst ein Gehäuse 102 mit einem Gehäuseinnenraum 103. In dem Gehäuseinnenraum 103 ist ein Schaufelkranz drehbar gelagert, wobei vorliegend lediglich eine Schaufel 106 des Schaufelkranzes dargestellt ist. In einer Gehäuseausnehmung 104 ist eine Zirkulationsvorrichtung 10 vorgesehen, welche beispielsweise in Radialerstreckungsrichtung R der Zirkulationsvorrichtung 10 an der Gehäuseausnehmung 104 und damit an dem Gehäuse 102 abgestützt ist.

Die Fig. 2a-d zeigen jeweils vergrößerte Ansichten eines in Fig. 1 strichpunktiert umrandeten Bereichs A. Während Fig. 2a die Anordnung der Zirkulationsvorrichtung an dem Gehäuse 102 in vergrößerter Darstellung zeigt, verdeutlichen Fig. 2b-d den möglichen Aufbau zumindest von Teilbereichen eines Strukturträgers 40 der Zirkulationsvorrichtung 10.

Die Zirkulationsvorrichtung 10 umfasst eine Zirkulationsstruktur 20 welche im vorliegenden Ausführungsbeispiel einteilig mit dem Strukturträger 40 verbunden ist. Der Strukturträger umfasst zwei einander gegenüberliegend angeordnete Formschlussbereiche 26, mittels welchen der Strukturträger 40 und damit die Zirkulationsvorrichtung 10 formschlüssig in der Gehäuseausnehmung 104 gehalten ist. Die Zirkulationsvorrichtung 10 kann allgemein beispielsweise eine Ringkontur, eine Halbringkontur oder eine Ringsegmentkontur aufweisen, je nachdem welche dieser Konturen eine Montierbarkeit am Gehäuse 102 ermöglicht. Die Zirkulationsvorrichtung 10 kann allgemein auch sowohl als geschlossener Ring als auch aus einzelnen Segmenten, beispielsweise aus Ringsegmenten, gebildet sein. Zusätzlich oder alternativ zu dem Formschluss (anhand der Formschlussbereiche 26) kann die Zirkulationsvorrichtung 10 auch beispielsweise stoffschlüssig und zusätzlich oder alternativ kraftschlüssig in der Gehäuseausnehmung 104 gehalten sein.

Die Zirkulationsstruktur 20 der Zirkulationsvorrichtung 10 umfasst eine Strukturoberfläche 24, mittels welcher ein aerodynamisch stabiler Betriebsbereich der Strömungsmaschine 100 vergrößert werden kann.

Der Strukturträger 40 umfasst wenigstens einen Hohlraum 50, in welchem zumindest eine Versteifungsstruktur 60 vorgesehen ist. Dadurch weist die Zirkulationsvorrichtung 10 insgesamt gleichzeitig eine hohe Steifigkeit und ein geringes Gewicht auf, wodurch die Zirkulationsvorrichtung 10 auch beispielsweise unter besonders geringem Aufwand an der Strömungsmaschine 100, bzw. an deren Gehäuse 102 montierbar ist.

Der Strukturträger 40 weist zumindest ein Wandelement 22 auf, welches zumindest in Radialerstreckungsrichtung R der Zirkulationsvorrichtung 10 gegenüberliegend zu der Zirkulationsstruktur 20 angeordnet ist, und an welchem die Zirkulationsvorrichtung 10 gegenüber dem Gehäuse 102 der Strömungsmaschine 100 abgestützt ist. Entgegen der Radialerstreckungsrichtung R und damit gegenüberliegend zu dem Wandelement 22 ist der Hohlraum 50 zumindest bereichsweise durch die Zirkulationsstruktur 20 begrenzt.

Die Zirkulationsvorrichtung 10 kann insgesamt auch einteilig ausgebildet sein, sodass die Versteifungsstruktur 60 einerseits mit der Zirkulationsstruktur 20 und andererseits mit dem Wandelement 22 verbunden sein kann.

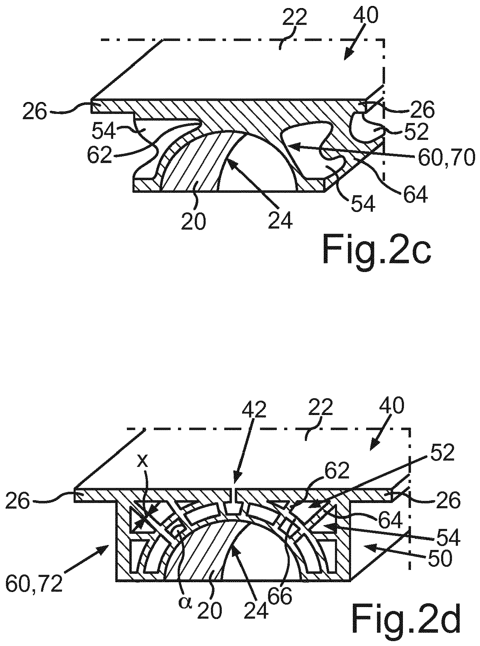

Die Versteifungsstruktur 60 kann, wie insbesondere die Fig. 2b und Fig. 2d zeigen, eine Mehrzahl oder Vielzahl miteinander verbundene Versteifungselemente 62, 64, 66 umfassen, welche den Hohlraum 50 in Teilräume 52, 54 unterteilen. Die Versteifungselemente 62, 64, 66 können vorzugsweise rippenförmig oder stabförmig ausgestaltet sein und beispielsweise eine Wandstärke x im Bereich von 0,5 mm bis 1,5 mm aufweisen. Bei dieser Wandstärke ist einerseits eine ausreichende Versteifung der Zirkulationsvorrichtung 10 und andererseits eine besonders hohe Gewichtseinsparung gegenüber aus dem Stand der Technik bekannten Systemen gegeben. Zudem können jeweils zwei der Versteifungselemente 62, 64, 66 beispielsweise einen Winkel α im Bereich von 30° bis 60° einschließen. Dieser Winkelbereich gestattet eine besonders homogene Lastverteilung im Strukturträger 40. Insbesondere kann der Winkel α vorzugsweise den Werten 30,0°, 30,5°, 31,0°, 31,5°, 32,0°, 32,5°, 33,0°, 33,5°, 34,0°, 34,5°, 35,0°, 35,5°, 36,0°, 36,5°, 37,0°, 37,5°, 38,0°, 38,5°, 39,0°, 39,5°, 40,0°, 40,5°, 41,0°, 41,5°, 42,0°, 42,5°, 43,0°, 43,5°, 44,0°, 44,5°, 45,0°, 45,5°, 46,0°, 46,5°, 47,0°, 47,5°, 48,0°, 48,5°, 49,0°, 49,5°, 50,0°, 50,5°, 51,0°, 51,5°, 52,0°, 52,5°, 53,0°, 53,5°, 54,0°, 54,5°, 55,0°, 55,5°, 56,0°, 56,5°, 57,0°, 57,5°, 58,0°, 58,5°, 59,0°, 59,5°, 60,0°, entsprechen.

Fig. 2d zeigt exemplarisch, dass die Zirkulationsvorrichtung 10 wenigstens eine Öffnung 42 aufweist, über welche ein Fluid zwischen dem Hohlraum 50 und der Umgebung U der Zirkulationsvorrichtung 10 austauschbar ist. Das Gehäuse 102 kann eine, mit der wenigstens einen Öffnung 42 korrespondierende Gehäuseöffnung aufweisen, um einen ungehinderten Fluidaustausch mit der Umgebung U zu ermöglichen. Die Gehäuseöffnung ist vorliegend nicht dargestellt. Um ein unerwünschtes Austreten eines beim Betrieb der Strömungsmaschine 100 durch den Gehäuseinnenraum 103 geführten Arbeitsmediums der Strömungsmaschine 100 über die wenigstens eine Öffnung 42 zu unterbinden, ist die wenigstens eine Öffnung 42 von der Zirkulationsstruktur 20 beabstandet.

Die Versteifungsstruktur 60 kann allgemein bereichsweise polyederförmig, insbesondere tetraederförmig ausgebildet sein. Hierzu können die einzelnen Versteifungselemente 62, 64, 66 entsprechende Polyederseiten bzw. Polyederkanten bilden. Die Versteifungsstruktur 60 kann auch zumindest bereichsweise als Fachwerk 68 ausgebildet sein, wie beispielsweise anhand von Fig. 2b schematisch angedeutet ist. Auch ein bereichsweises Ausgestalten der Versteifungsstruktur 60 aus einem Schaum 70, insbesondere aus einem Metallschaum ist möglich, wie anhand von Fig. 2c exemplarisch veranschaulicht ist.

Fig. 2d zeigt, dass die Versteifungsstruktur 60 auch zumindest bereichsweise als bionische Struktur 72 ausgebildet sein kann.

Allgemein ist es möglich, die Versteifungsstruktur 60 sowohl bereichsweise als das Fachwerk 68 sowie bereichsweise aus dem Schaum 70 und zusätzlich oder alternativ bereichsweise als bionische Struktur 72 auszubilden. Dadurch ist eine besonders belastungsgerechte Ausgestaltung der Versteifungsstruktur 60 möglich.

Eine besonders hohe Gewichtsersparnis und gleichzeitig ausreichende Steifigkeit kann beispielsweise erreicht werden, wenn zumindest einige der Versteifungselemente 62, 64, 66 aus dem Schaum 70 gebildet sind.

Die Zirkulationsvorrichtung 10 kann allgemein zumindest teilweise durch ein generatives Herstellverfahren und zusätzlich oder alternativ durch ein Gussverfahren hergestellt sein. Des Weiteren kann die Zirkulationsvorrichtung 10 durch mechanische und zusätzlich oder alternativ durch chemische Bearbeitungsverfahren, zu welchen beispielsweise Abtragtragverfahren gehören können, hergestellt sein.

Insgesamt kann durch die vorliegende Erfindung eine große Gewichtsreduktion und gezielte Erhöhung der Steifigkeit der Zirkulationsvorrichtung 10 gegenüber aus dem Stand der Technik bekannten Systemen erzielt werden. Der Hohlraum 50, bzw. die Teilräume 52, 54 können dabei jeweilige, das Bauteilgewicht der Zirkulationsvorrichtung 10 verringernde Aussparungen bzw. Vertiefungen darstellen, welche von der Zirkulationsstruktur 20 beabstandet sein können, also außerhalb von der Zirkulationsstruktur 20 angeordnet sein können.

Die Zirkulationsvorrichtung 10 kann allgemein zumindest teilweise aus einer Nickel-Legierung, einer Titanlegierung oder einem Stahlwerkstoff gebildet sein. Möglich ist auch eine Herstellung zumindest eines Teilbereichs der Zirkulationsvorrichtung 10 aus Kunststoff oder aus faserverstärktem Kunststoff, welcher auch als Faserverbundwerkstoff oder CFK bezeichnet werden kann, wodurch sich eine besonders große Gewichtsersparnis erreichen lässt.

Die Zirkulationsvorrichtung 10 kann auch integral mit zumindest einem Gehäusebereich des Gehäuses 102 hergestellt sein.

### Bezugszeichenliste:

- 10: Zirkulationsvorrichtung
- 20: Zirkulationsstruktur
- 22: Wandelement
- 24: Strukturoberfläche
- 26: Formschlussbereich
- 40: Strukturträger
- 42: Öffnung
- 50: Hohlraum
- 52: Teilraum
- 54: Teilraum
- 60: Versteifungsstruktur
- 62: Versteifungselement
- 64: Versteifungselement
- 66: Versteifungselement
- 68: Fachwerk
- 70: Schaum
- 72: Bionische Struktur
- 100: Strömungsmaschine
- 102: Gehäuse
- 103: Gehäuseinnenraum
- 104: Gehäuseausnehmung
- 106: Schaufel
- R: Radialerstreckungsrichtung
- U: Umgebung
- x: Wandstärke
- α: Winkel

## Patentansprüche

1. Zirkulationsvorrichtung (10) für eine Strömungsmaschine (100), mit wenigstens einer Zirkulationsstruktur (20) und mit wenigstens einem Strukturträger (40), an welchem die wenigstens eine Zirkulationsstruktur (20) gegenüber einem Gehäuse (102) der Strömungsmaschine (100) abstützbar ist,
**dadurch gekennzeichnet, dass**
der Strukturträger (40) wenigstens einen Hohlraum (50) umfasst, in welchem zumindest eine Versteifungsstruktur (60) vorgesehen ist.

2. Zirkulationsvorrichtung (10) nach Anspruch 1,
**dadurch gekennzeichnet, dass**
der Hohlraum (50) zumindest bereichsweise durch die Zirkulationsstruktur (20) begrenzt ist.

3. Zirkulationsvorrichtung (10) nach Anspruch 1 oder 2,
**dadurch gekennzeichnet, dass**
der Strukturträger (40) zumindest ein Wandelement (22) aufweist, welches zumindest in einer Radialerstreckungsrichtung (R) der Zirkulationsvorrichtung (10) gegenüberliegend zu der Zirkulationsstruktur (20) angeordnet ist, und an welchem die Zirkulationsvorrichtung (10) gegenüber dem Gehäuse (102) der Strömungsmaschine (100) abstützbar ist.

4. Zirkulationsvorrichtung (10) nach 3,
**dadurch gekennzeichnet, dass**
die Versteifungsstruktur (60) einerseits mit der Zirkulationsstruktur (20) und andererseits mit dem Wandelement (22) verbunden ist.

5. Zirkulationsvorrichtung (10) nach einem der vorhergehenden Ansprüche,
**dadurch gekennzeichnet, dass**
die Versteifungsstruktur (60) miteinander verbundene Versteifungselemente (62, 64, 66) umfasst, welche den Hohlraum (50) in Teilräume (52, 54) unterteilen.

6. Zirkulationsvorrichtung (10) nach einem der vorhergehenden Ansprüche,
**dadurch gekennzeichnet, dass**
die Zirkulationsvorrichtung (10) wenigstens eine Öffnung (42) aufweist, über welche ein Fluid zwischen dem Hohlraum (50) und der Umgebung (U) der Zirkulationsvorrichtung (10) austauschbar ist.

7. Zirkulationsvorrichtung (10) nach einem der vorhergehenden Ansprüche,
**dadurch gekennzeichnet, dass**
die wenigstens eine Öffnung (42) von der Zirkulationsstruktur (20) beabstandet ist.

8. Zirkulationsvorrichtung (10) nach einem der vorhergehenden Ansprüche,
**dadurch gekennzeichnet, dass**
die Versteifungsstruktur (60) zumindest bereichsweise polyederförmig, insbesondere tetraederförmig, ausgebildet ist.

9. Zirkulationsvorrichtung (10) nach einem der vorhergehenden Ansprüche,
**dadurch gekennzeichnet, dass**
die Versteifungsstruktur (60) zumindest bereichsweise als Fachwerk (68) ausgebildet ist.

10. Zirkulationsvorrichtung (10) nach einem der vorhergehenden Ansprüche,
**dadurch gekennzeichnet, dass**
die Versteifungsstruktur (60) zumindest bereichsweise aus einem Schaum (70), insbesondere aus einem Metallschaum, gebildet ist.

11. Zirkulationsvorrichtung (10) nach einem der vorhergehenden Ansprüche,
**dadurch gekennzeichnet, dass**
die Versteifungsstruktur (60) zumindest bereichsweise als bionische Struktur (72) ausgebildet ist.

12. Zirkulationsvorrichtung (10) nach einem der vorhergehenden Ansprüche,
**dadurch gekennzeichnet, dass**
die Zirkulationsvorrichtung (10) einteilig ausgebildet ist.

13. Strömungsmaschine (100), nach einem der vorhergehenden Ansprüche,
**dadurch gekennzeichnet, dass**
die Zirkulationsvorrichtung (10) als geschlossener Ring ausgebildet oder aus wenigstens zwei Ringsegmenten gebildet ist.

14. Verfahren zum Herstellen einer Zirkulationsvorrichtung (10) nach einem der Ansprüche 1 bis 13,
**dadurch gekennzeichnet, dass**
die Zirkulationsvorrichtung (10) zumindest teilweise durch ein generatives Herstellverfahren und/oder durch ein Gussverfahren hergestellt wird.

15. Strömungsmaschine (100), insbesondere Flugtriebwerk, umfassend wenigstens eine Zirkulationsvorrichtung (10), welche gemäß einem der Ansprüche 1 bis 13 ausgebildet und/oder gemäß Anspruch 14 hergestellt ist.
